# EUROPEAN PATENT SPECIFICATION

(11) **EP 3 361 682 B1**
(45) Date of publication and mention of the grant of the patent: **31.03.2021**
(21) Application number: 16853015.2
(22) Date of filing: 05.07.2016
(51) Int. Cl.: H04L 12/715, H04L 12/761, H04L 12/781, H04L 12/803

(54) **BIT INDEXED EXPLICIT REPLICATION (BIER) INFORMATION TRANSMISSION METHOD AND RECEPTION METHOD, AND RELATED DEVICE**
VERFAHREN ZUR ÜBERTRAGUNG VON BIT INDEXED EXPLICIT REPLICATION (BIER)-INFORMATIONEN UND EMPFANGSVERFAHREN SOWIE ZUGEHÖRIGE VORRICHTUNG
PROCÉDÉ D'ÉMISSION ET PROCÉDÉ DE RÉCEPTION D'INFORMATIONS BIER, BIT INDEXED EXPLICIT REPLICATION, ET DISPOSITIF ASSOCIÉ

(30) Priority: 09.10.2015 CN 201510648751
(43) Date of publication of application: 15.08.2018
(73) Proprietor: ZTE Corporation, Shenzhen, Guangdong 518057 (CN)
(72) Inventor: CHEN, Ran, Shenzhen, Guangdong 518057 (CN); ZHANG, Zheng, Shenzhen, Guangdong 518057 (CN)
(74) Representative: Aipex B.V.
(86) International application number: PCT/CN2016/088605
(87) International publication number: WO 2017/059708

(56) References cited:
- CN-A- 103 152 272
- CN-A- 104 811 387
- US-A1- 2006 233 181
- XU M CHEN HUAWEI K PATEL I WIJNANDS CISCO A PRZYGIENDA ERICSSON X: "BGP Extensions for BIER; draft-ietf-bier-idr-extensions-00.txt", BGP EXTENSIONS FOR BIER; DRAFT-IETF-BIER-IDR-EXTENSIONS-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 24 September 2015 (2015-09-24), pages 1-7, XP015108605, [retrieved on 2015-09-24]
- ECKERT CISCO SYSTEMS T ET AL: "Traffic Enginering for Bit Index Explicit Replication BIER-TE; draft-eckert-bier-te-arch-01.txt", TRAFFIC ENGINERING FOR BIT INDEX EXPLICIT REPLICATION BIER-TE; DRAFT-ECKERT-BIER-TE-ARCH-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 6 July 2015 (2015-07-06), pages 1-23, XP015107276, [retrieved on 2015-07-06]
- CHEN, R. ET AL.: 'BGP Link-State Extensions for BIER draft-chen-idr-bgp-ls-bier-ext-00' IETF NETWORKING WG INTERNET DRAFT 30 October 2015, pages 1 - 9, XP015109552
- CHEN, R. ET AL.: 'BGP Link-State Extensions for BIER draft-chenvgovindan-bier-bgp-ls-bier-ext-00 ' IETF NETWORKING WG INTERNET DRAFT. 12 March 2016, XP015111706

## Description

### TECHNICAL FIELD

The present invention relates to, but is not limited to, the field of communications and, in particular, relates to a method for transmitting Bit Indexed Explicit Replication (BIER) information, a method for receiving BIER information and an apparatus.

### BACKGROUND

The Internet Protocol (IP) multicast technology enables efficient point-to-multipoint data transmission in an IP network, effectively saving network bandwidth and reducing network load. Therefore, IP multicast is widely used in real-time data transmission, multimedia conference, data replication, Internet Protocol television (IPTV), game, simulation and many other aspects. Existing multicast technologies are generally implemented by a Protocol Independent Multicast (PIM). The PIM includes: Protocol Independent Multicast-Sparse Mode (PIM-SM), a Protocol Independent Multicast-Dense Mode (PIM-DM)), a Multicast Source Discovery Protocol (MSDP), etc. A common feature of these multicast protocols is that a control plane multicast tree needs to be constructed. Such multicast tree is used to logicalize the network plane into a tree to achieve point-to-multipoint data forwarding and loop avoidance in multicast forwarding. Intermediate nodes of such multicast routing protocols that are centered on multicast tree construction all need to maintain status of complex multicast forwarding information. With a growing network size and increasing multicast data traffic, such multicast technologies are facing increasingly greater challenges in costs, operation and maintenance.

In view of this, the industry has proposed a new technology called Bit Indexed Explicit Replication (BIER) for constructing a multicast forwarding path. This technology presents a new multicast technical architecture that does not require multicast tree construction. BIER is a bit-based multicast replication technology. In a BIER domain, each edge Bit-Forwarding Egress Router (BFER) is allocated a globally unique bit position in the entire BIER sub-domain. Each BFER uses an Interior Gateway Protocol (IGP) to flood its own bit position in the BIER domain. All bit positions form a Bitstring. Transmission and routing of a data message depend on the Bitstring. When receiving a message header containing BIER, another bit forwarding router (BFR) forwards the message based on a Bit Forwarding Table according to the Bitstring carried in the message header. This principle of forwarding based on a BIER bit is forwarding multicast by changing the forwarding based on the multicast distribution tree construction to unicast searching and forwarding using a bit identifier, reducing forwarding costs in a network.

A BIER path may originate from IGP Shortest Path Tree (SPT). Traffic Engineering paths (TE paths) are generally not based on the result of IGP SPT, but selected by an appropriate network tool deployed on a source node of a BIER-TE path. The network tool here may be a controller, or a device such as a Path Control Element (PCE). When calculating the BIER-TE path, the network tool first needs to collect link state information and BIER-TE information in the network. However, no protocol can solve this problem at present. Alternatively, in a centralized-control BIER scenario, a core controller needs to collect BIER information. No protocol can be used to collect BIER information in this scenario at present. Further relevant technologies are also known from XU M CHEN HUAWEI K PATEL I WIJNANDS CISCO A PRZYGIENDA ERICSSON X: "BGP Extensions for BIER; draft-ietf-bier-idr-extensions-OO.txt", BGP EXTENSIONS FOR BIER; September 2015 (2015-09-24), pages 1-7, XP015108605; and ECKERT CISCO SYSTEMS T ET AL: "Traffic Enginering for Bit Index Explicit Replication BIER-TE; draft-eckert-bier-te-arch-01.txt", TRAFFIC ENGINERING FOR BIT INDEX EXPLICIT REPLICATION BIER-TE; pages 1-23, XP015107276.

No efficient solution has been provided to solve the problem in which BIER information cannot be collected in the related art.

### SUMMARY

The present invention provides a method for transmitting BIER information, a method for receiving BIER information and two apparatuses as defined in the attached independent claims. Further improvements are provided in the dependent claims. The present invention solves at least the problem that BIER information cannot be collected in the related art.

According to the present invention, a method for transmitting BIER information is provided. The method includes the following steps. A BIER node encapsulates the BIER information by use of an extended Border Gateway Protocol (BGP)-Link State (LS), and the BIER node notifies the BIER information to a predetermined node according to the extended BGP-LS.

Alternatively, the step in which the BIER node encapsulates the BIER information by use of the extended BGP-LS includes the following steps. The BIER node adds at least one BGP-LS attribute, and the BIER node encapsulates the BIER information by use of the at least one added BGP-LS attribute.

Alternatively, each of the at least one added BGP-LS attribute includes at least one of the followings: at least one newly-added node attribute, and at least one newly-added link attribute. A corresponding relation between the at least one added BGP-LS attribute and the BIER information includes at least one of the following cases. When one of the at least one added BGP-LS attribute is the at least one newly-added node attribute, the BIER information includes at least one of the followings: identifier information of a bit forwarding router (BFR) node in all BIER nodes, sub-domain information, Bitstring length information, information about at least one BIER Multi-Protocol Label Switching (MPLS) label, and BIER prefix information. The BIER prefix information includes at least one of IPV4 BIER prefix information and IPV6 BIER prefix information. When one of the at least one added BGP-LS attribute is the at least one newly-added link attribute, the BIER information includes BIER-Traffic Engineering (TE) information.

Alternatively, the BIER-TE information includes at least one of the followings: link bandwidth information, reserved bandwidth information, link coloring information, and metric information.

The predetermined node is a controller for calculating a path of a BIER-TE according to the BIER information. The BIER node includes a BIER node that is in a BIER domain, supports a BIER technology and is connected to the controller.

Alternatively, when the BIER node, that is in a BIER domain, supports a BIER technology and is connected to the controller, is an ingress node of BIER, the BIER information is at least one of: BIER information which is of a predetermined BIER node in the BIER domain and is pre-collected by the ingress node of the BIER, and BIER information of the ingress node of the BIER.

Alternatively, after the BIER node notifies the BIER information to the predetermined node according to the extended BGP-LS, the method further includes the following step. The BIER node receives path information transmitted by the controller after the controller calculates the path of the BIER-TE.

Alternatively, the path information includes information about BIER nodes through which the path passes. The information about the BIER nodes through which the path passes includes: a set of identifiers of the BIER nodes through which the path passes, or a set of Bitstrings of the BIER nodes through which the path passes.

Alternatively, after the BIER node notifies the BIER information to the predetermined node according to the extended BGP-LS, the method further includes the following steps. The BIER node receives tunnel information transmitted by the controller after the controller calculates a path of the BIER-TE. The BIER node establishes a tunnel according to the tunnel information; and/or the BIER node notifies the tunnel information to a BIER supporting node which is in the BIER domain, supports the BIER technology and is closest to a node not supporting the BIER technology to instruct the BIER supporting node to establish a tunnel according to the tunnel information. The tunnel information includes notification information for establishing the tunnel or tunnel label information for establishing the tunnel.

Alternatively, the BIER node is a first autonomous system (AS) boundary BIER node in a BIER domain. The predetermined node is a second AS boundary BIER node in the BIER domain. The BIER information is BIER information of all BIER nodes in an AS domain where the first AS boundary BIER node is located, or the BIER information is BIER information of a part of BIER nodes in the AS domain where the first AS boundary BIER node is located. The part of the BIER nodes are BIER nodes determined by the first AS boundary BIER node according to a predetermined strategy. The second AS boundary BIER node, after receiving the BIER information, floods the BIER information to all or specific BIER nodes in an AS domain where the second AS boundary BIER node is located.

According to the present invention, a method for receiving BIER information is provided. The method includes the following steps. A predetermined node receives BIER information transmitted by a BIER node according to an extended Border Gateway Protocol (BGP)-Link State (LS), where the BIER information is BIER information encapsulated in the extended BGP-LS by the BIER node.

The predetermined node is a controller for calculating a path of a BIER-traffic engineering (TE) according to the BIER information. The BIER node includes a BIER node that is in a BIER domain, supports a BIER technology and is connected to the controller.

Alternatively, when the BIER node, that is in a BIER domain, supports a BIER technology and is connected to the controller, is an ingress node of the BIER, the BIER information is at least one of: BIER information which is of a predetermined BIER node in the BIER domain and is pre-collected by the ingress node of the BIER, and BIER information of the ingress node of the BIER.

Alternatively, after the predetermined node receives the BIER information, the method further includes the following steps. The predetermined node calculates the path of the BIER-TE according to the BIER information; and the predetermined node transmits path information of the path to the BIER node, or the predetermined node transmits the path information of the path to the ingress node of the BIER, an intermediate node of the BIER and an egress node of the BIER in the BIER domain where the BIER node is located.

Alternatively, the path information includes information about BIER nodes through which the path passes. The information about the BIER nodes through which the path passes includes: a set of identifiers of the BIER nodes through which the path passes, or a set of Bitstrings of the BIER nodes through which the path passes.

Alternatively, after the predetermined node receives the BIER information, the method further includes the following steps. The predetermined node calculates the path of the BIER-TE according to the BIER information; and the predetermined node transmits tunnel information to the BIER node after calculating the path. The tunnel information is used for at least one of: instructing the BIER node to establish a tunnel, and instructing the BIER node to notify the tunnel information to a BIER supporting node, which is in the BIER domain, supports the BIER technology and is closest to a node not supporting the BIER technology to instruct the BIER supporting node to establish a tunnel according to the tunnel information.
Or, after the predetermined node calculates the path, the predetermined node transmits the tunnel information to the BIER supporting node, which is in the BIER domain where the BIER node is located, supports the BIER technology and is closest to a node not supporting the BIER technology. The tunnel information is used for instructing the BIER supporting node to establish a tunnel.
The tunnel information includes notification information for establishing the tunnel or tunnel label information for establishing the tunnel.

Alternatively, the BIER node is a first autonomous system (AS) boundary BIER node in a BIER domain. The predetermined node is a second AS boundary BIER node in the BIER domain. The BIER information is one of: BIER information of all BIER nodes in an AS domain where the first AS boundary BIER node is located, or BIER information of a part of BIER nodes in the AS domain where the first AS boundary BIER node is located. The part of the BIER nodes are BIER nodes determined by the first AS boundary BIER node according to a predetermined strategy. The second AS boundary BIER node, after receiving the BIER information, floods the BIER information to all or specific BIER nodes in an AS domain where the second AS boundary BIER node is located.

According to the present invention, an apparatus for transmitting BIER information is provided. The apparatus is applied to a BIER node. The apparatus includes an encapsulation module and a notification module. The encapsulation module is configured to encapsulate the BIER information by use of an extended Border Gateway Protocol (BGP)-Link State (LS). The notification module is configured to notify the BIER information to a predetermined node according to the extended BGP-LS.

Alternatively, the encapsulation module includes an adding unit and an encapsulation unit. The adding unit is configured to add at least one BGP-LS attribute. The encapsulation unit is configured to encapsulate the BIER information by use of the at least one added BGP-LS attribute.

Alternatively, each of the at least one added BGP-LS attribute includes at least one of the followings: at least one newly-added node attribute and at least one newly-added link attribute. A corresponding relation between the at least one added BGP-LS attribute and the BIER information includes at least one of the following cases. When one of the at least one added BGP-LS attribute is the at least one newly-added node attribute, the BIER information includes at least one of the followings: identifier information of a bit forwarding router (BFR) node in all BIER nodes, sub-domain information, Bitstring length information, information about at least one BIER Multi-Protocol Label Switching (MPLS) label, and BIER prefix information. The BIER prefix information includes at least one of IPV4 BIER prefix information and IPV6 BIER prefix information. When one of the at least one added BGP-LS attribute is the at least one newly-added link attribute, the BIER information includes BIER-Traffic Engineering (TE) information.

Alternatively, the BIER-TE information includes at least one of the followings: link bandwidth information, reserved bandwidth information, link coloring information, and metric information.

The predetermined node is a controller for calculating a path of a BIER-TE according to the BIER information. The BIER node includes a BIER node that is in a BIER domain, supports a BIER technology and is connected to the controller.

Alternatively, when the BIER node, that is in a BIER domain, supports a BIER technology and is connected to the controller, is an ingress node of the BIER, the BIER information is BIER information which is of a predetermined BIER node in the BIER domain and is pre-collected by the ingress node of the BIER.

Alternatively, the apparatus further includes a first receiving module. The first receiving module is configured to, after the notification module notifies the BIER information to the predetermined node according to the extended BGP-LS, receive path information transmitted by the controller after the controller calculates the path of the BIER-TE.

Alternatively, the path information includes information about BIER nodes through which the path passes. The information about the BIER nodes through which the path passes includes a set of identifiers of the BIER nodes through which the path passes, or a set of Bitstrings of the BIER nodes through which the path passes.

Alternatively, the apparatus further includes a second receiving module and a processing module. The second receiving module is configured to, after the notification module notifies the BIER information to the predetermined node according to the extended BGP-LS, receive tunnel information transmitted by the controller after the controller calculates the path of the BIER-TE path. The processing module is configured to establish a tunnel according to the tunnel information; and/or notify the tunnel information to a BIER supporting node, which is in the BIER domain, supports the BIER technology and is closest to a node not supporting the BIER technology to instruct the BIER supporting node to establish a tunnel according to the tunnel information. The tunnel information includes notification information for establishing the tunnel or tunnel label information for establishing the tunnel.

Alternatively, the BIER node is a first autonomous system (AS) boundary BIER node in a BIER domain. The predetermined node is a second AS boundary BIER node in the BIER domain. The BIER information is one of BIER information of all BIER nodes in an AS domain where the first AS boundary BIER node is located, or BIER information of a part of BIER nodes in the AS domain where the first AS boundary BIER node is located. The part of the BIER nodes are BIER nodes determined by the first AS boundary BIER node according to a predetermined strategy. The second AS boundary BIER node, after receiving the BIER information, floods the BIER information to all or specific BIER nodes in an AS domain where the second AS boundary BIER node is located.

According to the present invention, an apparatus for receiving BIER information is provided. The apparatus is applied to a predetermined node. The apparatus includes a third receiving module. The third receiving module is configured to receive BIER information transmitted according to an extended Border Gateway Protocol (BGP)-Link State (LS), where the BIER information is BIER information encapsulated in the extended BGP-LS by the BIER node.

The predetermined node is a controller for calculating a path of a BIER-traffic engineering (TE) according to the BIER information. The BIER node includes a BIER node that is in a BIER domain, supports a BIER technology and is connected to the controller.

Alternatively, when the BIER node, that is in a BIER domain, supports a BIER technology and is connected to the controller, is an ingress node of the BIER, the BIER information is at least one of: BIER information which is of a predetermined BIER node in the BIER domain and is pre-collected by the ingress node of the BIER, and BIER information of the ingress node of the BIER.

Alternatively, the apparatus further includes a first calculation module and a first transmitting module. The first calculation module is configured to calculate the path of the BIER-TE according to the BIER information after the third receiving module receives the BIER information. The first transmitting module is configured to transmit the path information of the path to the BIER node; or transmit the path information of the path to the ingress node of the BIER, an intermediate node of the BIER and an egress node of the BIER in the BIER domain where the BIER node is located.

Alternatively, the path information includes information about BIER nodes through which the path passes. The information about the BIER nodes through which the path passes includes: a set of identifiers of the BIER nodes through which the path passes, or a set of Bitstrings of the BIER nodes through which the path passes.

Alternatively, the apparatus further includes a second calculation module and a second transmitting module. The second calculation module is configured to calculate the path of the BIER-TE according to the BIER information after the third receiving module receives the BIER information. The second transmitting module is configured to transmit tunnel information to the BIER node after the second calculation module calculates the path. The tunnel information is used for at least one of: instructing the BIER node to establish a tunnel, and instructing the BIER node to notify the tunnel information to a BIER supporting node, which is in the BIER domain, supports the BIER technology and is closest to a node not supporting the BIER technology to instruct the BIER supporting node to establish a tunnel according to the tunnel information.
Or The second transmitting module is configured to, after the second calculation module calculates the path, transmit the tunnel information to a BIER supporting node, which is in the BIER domain where the BIER node is located, supports the BIER technology and is closest to a node not supporting the BIER technology. The tunnel information is used for instructing the BIER supporting node to establish a tunnel.
The tunnel information includes notification information for establishing the tunnel or tunnel label information for establishing the tunnel.

Alternatively, the BIER node is a first autonomous system (AS) boundary BIER node in a BIER domain. The predetermined node is a second AS boundary BIER node in the BIER domain. The BIER information is BIER information of all BIER nodes in an AS domain where the first AS boundary BIER node is located, or BIER information of a part of BIER nodes in the AS domain where the first AS boundary BIER node is located. the part of the BIER nodes are BIER nodes determined by the first AS boundary BIER node according to a predetermined strategy. The apparatus further includes a flooding module. The flooding module is configured to flood the BIER information to all or specific BIER nodes in an AS domain where the second AS boundary BIER node is located after the second AS boundary BIER node receives the BIER information.

Examples of the present invention further provide a computer-readable storage medium, and the computer-readable storage medium is configured to store computer-executable instructions. The computer-executable instruction is executed to perform the above method for transmitting BIER information.

Examples of the present invention further provide a computer-readable storage medium, and the computer-readable storage medium is configured to store computer-executable instructions. The computer-executable instruction is executed to perform the above method for receiving BIER information.

Through embodiments of the present invention, a BIER node encapsulates the BIER information by use of an extended BGP-LS, and the BIER node notifies the BIER information to a predetermined node according to the extended BGP-LS. This method solves the problem in which BIER information cannot be collected in the related art and thereby achieves the effect of being capable of collecting BIER information.

### BRIEF DESCRIPTION OF DRAWINGS

FIG. 1 is a flowchart of a method for transmitting BIER information according to an embodiment of the present invention;
FIG. 2 is a flowchart of a method for receiving BIER information according to an embodiment of the present invention;
FIG. 3 is a block diagram of an apparatus for transmitting BIER information according to an embodiment of the present invention;
FIG. 4 is a block diagram of an encapsulation module 32 in an apparatus for transmitting BIER information according to an embodiment of the present invention;
FIG. 5 is an alternative block diagram one of an apparatus for transmitting BIER information according to an embodiment of the present invention;
FIG. 6 is an alternative block diagram two of an apparatus for transmitting BIER information according to an embodiment of the present invention;
FIG. 7 is a block diagram of an apparatus for receiving BIER information according to an embodiment of the present invention;
FIG. 8 is an alternative block diagram one of an apparatus for receiving BIER information according to an embodiment of the present invention;
FIG. 9 is an alternative block diagram two of an apparatus for receiving BIER information according to an embodiment of the present invention;
FIG. 10 is a networking diagram of the BIER technology in a centralized control scenario according to an embodiment of the present invention;
FIG. 11 is a flowchart of a path calculation according to an embodiment one of the present invention;
FIG. 12 is a networking diagram of a hybrid scenario in a centralized control scenario according to an embodiment of the present invention;
FIG. 13 is a flowchart of a path calculation according to an embodiment two of the present invention;
FIG. 14 is a networking diagram of another hybrid scenario in a centralized control scenario according to an embodiment of the present invention;
FIG. 15 is a networking diagram of a distributed BIER technology according to an embodiment of the present invention;
FIG. 16 is a flowchart of a path calculation according to an embodiment four of the present invention;
FIG. 17 is a schematic diagram one of carrying BIER-related information according to an embodiment of the present invention;
FIG. 18 is a schematic diagram two of carrying BIER-related information according to an embodiment of the present invention; and
FIG. 19 is a schematic diagram three of carrying BIER-related information according to an embodiment of the present invention.

### DETAILED DESCRIPTION

The present application will be described hereinafter in detail with reference to the accompanying drawings and in connection with the embodiments.

It is to be illustrated that the terms "first", "second" and the like in the description, claims and drawings of the present application are used to distinguish between similar objects and are not necessarily used to describe a particular order or sequence.

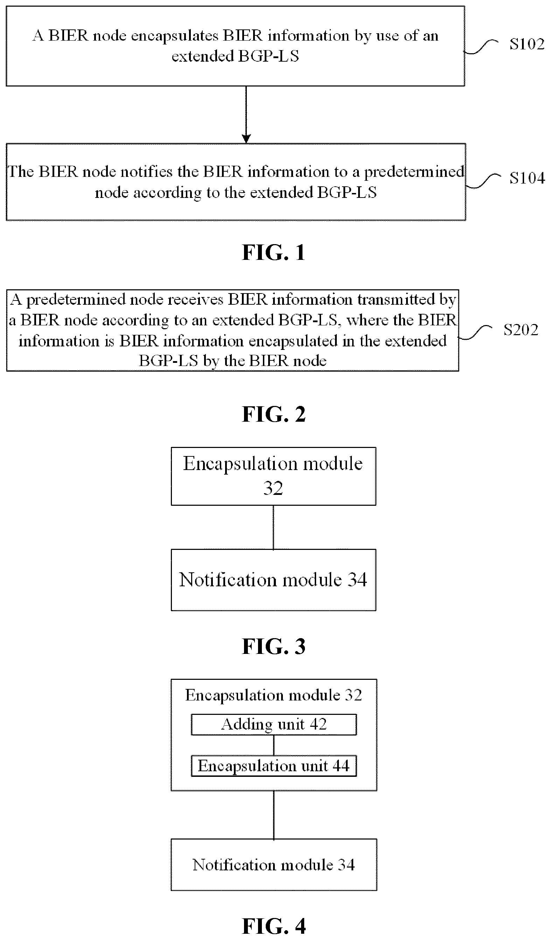

This embodiment provides a method for transmitting BIER information. FIG. 1 is a flowchart of a method for transmitting BIER information according to an embodiment of the present invention. As shown in FIG. 1, the method includes the following steps.

In step S102, a BIER node encapsulates BIER information by use of an extended BGP-LS.

In step S104, the BIER node notifies the BIER information to a predetermined node according to the extended BGP-LS.

Through the above steps, the BIER node can encapsulate the BIER information by use of the extended BGP-LS, so that the BIER node can notify the BIER information to the predetermined node. This method achieves the purpose of operating the predetermined node to collect BIER information. This method solves the problem in which BIER information cannot be collected in the related art and thereby achieves the effect of being capable of collecting BIER information.

In an exemplary embodiment, The BIER node encapsulates the BIER information by use of the extended BGP-LS includes the following steps. The BIER node adds at least one BGP-LS attribute. The BIER node encapsulates the BIER information by use of the at least one added BGP-LS attribute.

In an exemplary embodiment, each of the at least one added BGP-LS attribute includes at least one of the followings: at least one newly-added node attribute and at least one newly-added link attribute. A corresponding relation between the at least one added BGP-LS attribute and the BIER information includes at least one of the following cases. When one of the at least one added BGP-LS attribute is the at least one newly-added node attribute, the BIER information includes at least one of the followings: identifier information of bit forwarding router (BFR) nodes in all BIER nodes, sub-domain information, Bitstring length information, information about at least one BIER Multi-Protocol Label Switching (MPLS) label, and BIER prefix information. The BIER prefix information includes at least one of IPV4 BIER prefix information and IPV6 BIER prefix information. When one of the at least one added BGP-LS attribute is the at least one newly-added link attribute, the BIER information includes BIER-Traffic Engineering (TE) information. It is to be illustrated that the above corresponding relation is only an example, and the corresponding relation between the at least one added BGP-LS attribute and the BIER information may be other corresponding relations.

In an exemplary embodiment, the BIER-TE information includes at least one of the followings: link bandwidth information, reserved bandwidth information, link coloring information, and metric information.

In an exemplary embodiment, the predetermined node is a controller for calculating a path of a BIER- TE according to the BIER information, and the BIER node includes a BIER node that in a BIER domain supports a BIER technology and is connected to the controller.

In an exemplary embodiment, when the BIER node, that is in a BIER domain, supports a BIER technology and is connected to the controller, is an ingress node of the BIER, the BIER information is at least one of: BIER information which is of a predetermined BIER node in the BIER domain and is pre-collected by the ingress node of the BIER, and BIER information of the ingress node of the BIER.

In an exemplary embodiment, after the BIER node notifies the BIER information to the predetermined node according to the extended BGP-LS, the method further includes the following step. The BIER node receives path information transmitted by the controller after the controller calculates the path of the BIER-TE.

In an exemplary embodiment, the path information includes information about BIER nodes through which the path passes. The information about the BIER nodes through which the path passes includes: a set of identifiers of the BIER nodes through which the path passes, or a set of Bitstrings of the BIER nodes through which the path passes.

In an exemplary embodiment, after the BIER node notifies the BIER information to the predetermined node according to the extended BGP-LS, the method further includes the following steps. The BIER node receives tunnel information transmitted by the controller after the controller calculates a path of the BIER-TE. The BIER node establishes a tunnel according to the tunnel information; and/or the BIER node notifies the tunnel information to a BIER supporting node, which is in the BIER domain, supports the BIER technology and is closest to a node not supporting the BIER technology, to instruct the BIER supporting node to establish a tunnel according to the tunnel information. The tunnel information includes notification information for establishing the tunnel or tunnel label information for establishing the tunnel.

In an exemplary embodiment, the BIER node is a first autonomous system (AS) boundary BIER node in a BIER domain. The predetermined node is a second AS boundary BIER node in the BIER domain. The BIER information is BIER information of all BIER nodes in an AS domain where the first AS boundary BIER node is located, or BIER information of a part of BIER nodes in the AS domain where the first AS boundary BIER node is located. The part of the BIER nodes are BIER nodes determined by the first AS boundary BIER node according to a predetermined strategy. The second AS boundary BIER node, after receiving the BIER information, floods the BIER information to all or specific BIER nodes in an AS domain where the second AS boundary BIER node is located.

Embodiments of the present invention further provide a method for receiving BIER information. FIG. 2 is a flowchart of a method for receiving BIER information according to an embodiment of the present invention. As shown in FIG. 2, the method includes the following steps.

In step S202, a predetermined node receives BIER information transmitted by a BIER node according to an extended BGP-LS. The BIER information is BIER information encapsulated in the extended BGP-LS by the BIER node.

Through the above steps, the BIER node can encapsulate the BIER information by use of the extended BGP-LS so that the BIER node can notify the BIER information to the predetermined node. This method achieves the purpose of collecting the BIER information by the predetermined node. This method solves the problem in which BIER information cannot be collected in the related art and thereby achieves the effect of being capable of collecting the BIER information.

In an exemplary embodiment, the predetermined node is a controller for calculating a path of a BIER-traffic engineering (TE) according to the BIER information. The BIER node includes a BIER node that is in a BIER domain, supports a BIER technology and is connected to the controller.

In an exemplary embodiment, when the BIER node, that is in a BIER domain, supports a BIER technology and is connected to the controller, is an ingress node of the BIER, the BIER information is at least one of: BIER information which is of a predetermined BIER node in the BIER domain and is pre-collected by the ingress node of the BIER, and BIER information of the ingress node of the BIER.

In an exemplary embodiment, after the predetermined node receives the BIER information, the method further includes the following steps. The predetermined node calculates the path of the BIER-TE according to the BIER information. The predetermined node transmits path information of the path to the BIER node; or the predetermined node transmits the path information of the path to the ingress node of the BIER, an intermediate node of the BIER and an egress node of the BIER in the BIER domain where the BIER node is located.

In an exemplary embodiment, the path information includes information about BIER nodes through which the path passes. The information about the BIER nodes through which the path passes includes a set of identifiers of the BIER nodes through which the path passes, or a set of Bitstrings of the BIER nodes through which the path passes.

In an exemplary embodiment, after the predetermined node receives the BIER information, the method further includes the following steps. The predetermined node calculates the path of BIER-TE according to the BIER information. The predetermined node transmits tunnel information to the BIER node after calculating the path. The tunnel information is used for at least one of: instructing the BIER node to establish a tunnel, and instructing the BIER node to notify the tunnel information to a BIER supporting node, which is in the BIER domain, supports the BIER technology and is closest to a node not supporting the BIER technology, to instruct the BIER supporting node to establish a tunnel according to the tunnel information.

Or, the predetermined node, after calculating the path, transmits the tunnel information to a BIER supporting node, which is in the BIER domain where the BIER node is located, supports the BIER technology and is closest to a node not supporting the BIER technology. The tunnel information is used for instructing the BIER supporting node to establish a tunnel.

The tunnel information includes notification information for establishing the tunnel or tunnel label information for establishing the tunnel.

In an exemplary embodiment, the BIER node is a first autonomous system (AS) boundary BIER node in a BIER domain. The predetermined node is a second AS boundary BIER node in the BIER domain. The BIER information is BIER information of all BIER nodes in an AS domain where the first AS boundary BIER node is located, BIER information of a part of BIER nodes in the AS domain where the first AS boundary BIER node is located. The part of the BIER nodes are BIER nodes determined by the first AS boundary BIER node according to a predetermined strategy. The second AS boundary BIER node, after receiving the BIER information, floods the BIER information to all or specific BIER nodes in an AS domain where the second AS boundary BIER node is located.

From the description of the embodiments described above, it will be apparent to those skilled in the art that the method of any embodiment described above may be implemented by means of software plus a necessary general-purpose hardware platform, or may of course be implemented by hardware, but in many cases, the former is a preferred implementation mode. Based on this understanding, the solution provided by the present application substantially, or the part contributing to the related art, may be embodied in the form of a software product. The software product is stored on a storage medium (such as a ROM/RAM, a magnetic disk or an optical disk) and includes several instructions for enabling a terminal device (which may be a mobile phone, a computer, a server or a network device) to execute the method according to each embodiment of the present application.

Embodiments of the present invention further provide an apparatus for transmitting BIER information. The apparatus is used for implementing the above-mentioned embodiments and exemplary embodiments. What has been described will not be repeated. As used below, the term "module" may be software, hardware or a combination thereof capable of implementing preset functions. The apparatuses in the embodiments are preferably implemented by software, but implementation by hardware or by a combination of software and hardware is also possible and conceived.

FIG. 3 is a block diagram of an apparatus for transmitting BIER information according to an embodiment of the present invention. As shown in FIG. 3, the apparatus can be applied to a BIER node and includes an encapsulation module 32 and a notification module 34. The apparatus is described below.

The encapsulation module 32 is configured to encapsulate the BIER information by use of an extended BGP-LS.

The notification module 34 is connected to the encapsulation module 32 and configured to notify the BIER information to a predetermined node according to the extended BGP-LS.

FIG. 4 is a block diagram of an encapsulation module 32 in an apparatus for transmitting BIER information according to an embodiment of the present invention. As shown in FIG. 4, the encapsulation module 32 includes an adding unit 42 and an encapsulation unit 44. The encapsulation module 32 is described below.

The adding unit 42 is configured to add at least one BGP-LS attribute.

The encapsulation unit 44 is connected to the adding unit 42 and configured to encapsulate the BIER information by use of the at least one added BGP-LS attribute.

In an exemplary embodiment, each of the at least one added BGP-LS attribute includes at least one of the followings: at least one newly-added node attribute and at least one newly-added link attribute. A corresponding relation between the at least one added BGP-LS attribute and the BIER information includes at least one of the following cases. When one of the at least one added BGP-LS attribute is the at least one newly-added node attribute, the BIER information includes at least one of the followings: identifier information of a bit forwarding router (BFR) nodes in all BIER node, sub-domain information, Bitstring length information, information about at least one BIER Multi-Protocol Label Switching (MPLS) label, and BIER prefix information. The BIER prefix information includes at least one of IPV4 BIER prefix information and IPV6 BIER prefix information. When one of the at least one added BGP-LS attribute is the at least one added link attribute, the BIER information includes BIER- TE information.

In an exemplary embodiment, the BIER-TE information includes at least one of the followings: link bandwidth information, reserved bandwidth information, link coloring information, and metric information.

In an exemplary embodiment, the predetermined node is a controller for calculating a path of a BIER- TE path according to the BIER information, and the BIER node includes a BIER node that is in a BIER domain, supports a BIER technology and is connected to the controller.

In an exemplary embodiment, when the BIER node, that is in a BIER domain, supports a BIER technology and is connected to the controller, is an ingress node of the BIER, the BIER information is BIER information which is of a predetermined BIER node in the BIER domain and is pre-collected by the ingress node of the BIER.

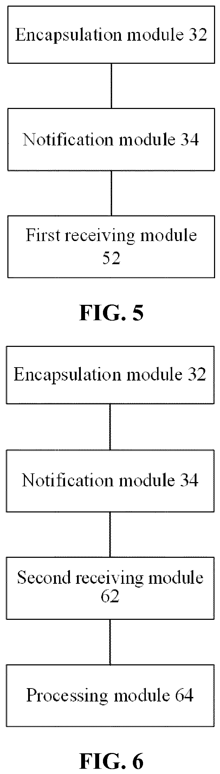

FIG. 5 is an alternative block diagram one of an apparatus for transmitting BIER information according to an embodiment of the present invention. As shown in FIG. 5, the apparatus includes a first receiving module 52 in addition to all modules shown in FIG. 3. The apparatus is described below.

The first receiving module 52 is connected to the notification module 34 and configured to receive path information transmitted by the controller after the controller calculates the path of the BIER-TE after the notification module 34 notifies the BIER information to the predetermined node according to the extended BGP-LS.

In an exemplary embodiment, the path information includes information about BIER nodes through which the path passes. The information about the BIER nodes through which the path passes includes: a set of identifiers of the BIER nodes through which the path passes, or a set of Bitstrings of the BIER nodes through which the path passes.

FIG. 6 is an alternative block diagram two of an apparatus for transmitting BIER information according to an embodiment of the present invention. As shown in FIG. 6, the apparatus includes a second receiving module 62 and a processing module 64 in addition to all modules shown in FIG. 3. The apparatus is described below.

The second receiving module 62 is connected to the notification module 34 and configured to receive tunnel information transmitted by the controller after the controller calculates the path of the BIER-TE after the notification module 34 notifies the BIER information to the predetermined node according to the extended BGP-LS. The processing module 64 is connected to the second receiving module 62 and configured to establish a tunnel according to the tunnel information; and/or notify the tunnel information to a BIER supporting node which is in the BIER domain, supports the BIER technology and is closest to a node not supporting the BIER technology to instruct the BIER supporting node to establish a tunnel according to the tunnel information. The tunnel information includes notification information for establishing the tunnel or tunnel label information for establishing the tunnel.

In an exemplary embodiment, the BIER node is a first autonomous system (AS) boundary BIER node in a BIER domain. The predetermined node is a second AS boundary BIER node in the BIER domain. The BIER information is BIER information of all BIER nodes in an AS domain where the first AS boundary BIER node is located, or BIER information of a part of BIER nodes in the AS domain where the first AS boundary BIER node is located. The part of the BIER nodes are BIER nodes determined by the first AS boundary BIER node according to a predetermined strategy. The second AS boundary BIER node, after receiving the BIER information, floods the BIER information to all or specific BIER nodes in an AS domain where the second AS boundary BIER node is located.

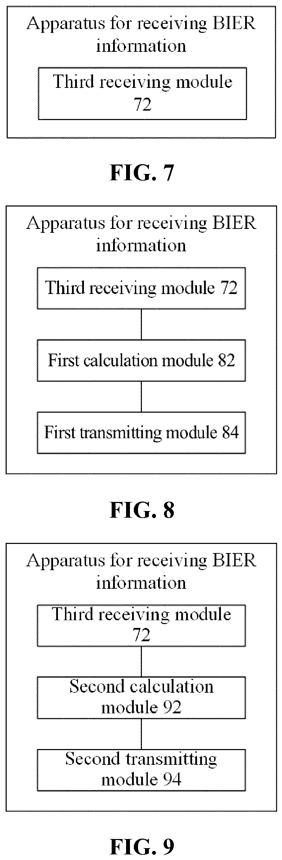

Embodiments of the present invention further provide an apparatus for receiving BIER information. FIG. 7 is a block diagram of an apparatus for receiving BIER information according to an embodiment of the present invention. As shown in FIG. 7, the apparatus can be applied to a predetermined node and includes a third receiving module 72. The apparatus is described below.

The third receiving module 72 is configured to receive BIER information transmitted according to an extended BGP-LS. The BIER information is BIER information encapsulated in the extended BGP-LS by the BIER node.

In an exemplary embodiment, the predetermined node is a controller for calculating a path of a BIER- TE according to the BIER information. The BIER node includes a BIER node that is in a BIER domain, supports a BIER technology and is connected to the controller.

In an exemplary embodiment, when the BIER node, that is in a BIER domain, supports a BIER technology and is connected to the controller, is an ingress node of the BIER, the BIER information is at least one of: BIER information which is of a predetermined BIER node in the BIER domain and is pre-collected by the ingress node of the BIER, and BIER information of the ingress node of the BIER.

FIG. 8 is an alternative block diagram one of an apparatus for receiving BIER information according to an embodiment of the present invention. As shown in FIG. 8, the apparatus includes a first calculation module 82 and a first transmitting module 84 in addition to all modules shown in FIG. 7. The apparatus is described below.

The first calculation module 82 is connected to the third receiving module 72 and configured to calculate the path of the BIER-TE according to the BIER information after the third receiving module 72 receives the BIER information. The first transmitting module 84 is connected to the first calculation module 82 and configured to transmit the path information of the path to the BIER node; or transmit the path information of the path to the ingress node of the BIER, an intermediate node of the BIER and an egress node of the BIER in the BIER domain where the BIER node is located.

In an exemplary embodiment, the path information includes information about BIER nodes through which the path passes. The information about the BIER nodes through which the path passes includes: a set of identifiers of the BIER nodes through which the path passes, or a set of Bitstrings of the BIER nodes through which the path passes.

FIG. 9 is an alternative block diagram two of an apparatus for receiving BIER information according to an embodiment of the present invention. As shown in FIG. 9, the apparatus includes a second calculation module 92 and a second transmitting module 94 in addition to all modules shown in FIG. 7. The apparatus is described below.

The second calculation module 92 is connected to the third receiving module 72 and configured to calculate the path of the BIER-TE according to the BIER information after the third receiving module 72 receives the BIER information. The second transmitting module 94 is connected to the second calculation module 92 and configured to transmit tunnel information to the BIER node after the second calculation module 92 calculates the path. The tunnel information is used for at least one of: instructing the BIER node to establish a tunnel, and instructing the BIER node to notify the tunnel information to a BIER supporting node, which is in the BIER domain, supports the BIER technology and is closest to a node not supporting the BIER technology, to instruct the BIER supporting node to establish a tunnel according to the tunnel information.

Or The second transmitting module 94 is configured to transmit the tunnel information to the BIER supporting node, which is in the BIER domain where the BIER node is located, supports the BIER technology and is closest to a node not supporting the BIER technology after the second calculation module 92 calculates the path. The tunnel information is used for instructing the BIER supporting node to establish a tunnel.

The tunnel information includes notification information for establishing the tunnel or tunnel label information for establishing the tunnel.

In an exemplary embodiment, the BIER node is a first autonomous system (AS) boundary BIER node in a BIER domain. the predetermined node is a second AS boundary BIER node in the BIER domain. The BIER information is BIER information of all BIER nodes in an AS domain where the first AS boundary BIER node is located, or BIER information of a part of BIER nodes in the AS domain where the first AS boundary BIER node is located. The part of the BIER nodes are BIER nodes determined by the first AS boundary BIER node according to a predetermined strategy and the apparatus further includes a flooding module. The flooding module is configured to flood the BIER information to all or specific BIER nodes in an AS domain where the second AS boundary BIER node is located after the second AS boundary BIER node receives the BIER information.

As can be seen from the above embodiments, a method for collecting BIER information by use of BGP is proposed in embodiments of the present invention. The present application will be further described in detail with reference to the accompanying drawings and examples.

### Example one:

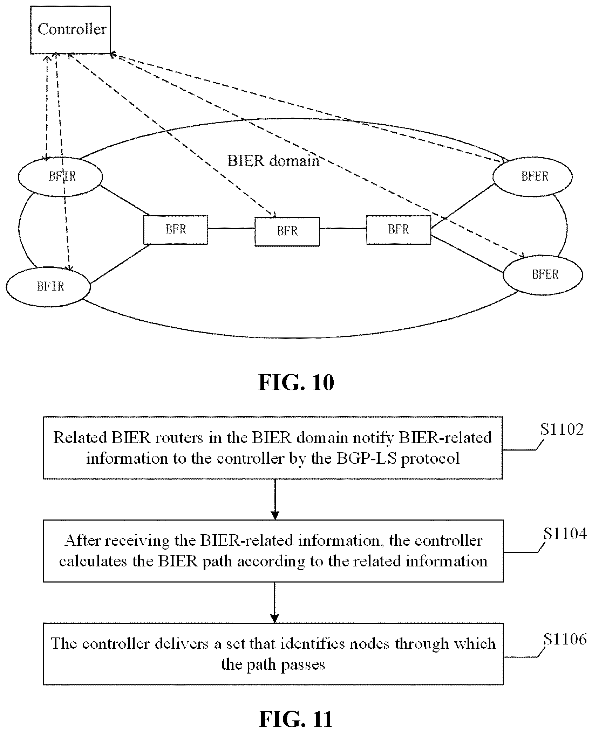

FIG. 10 is a networking diagram of a BIER technology in a centralized control scenario according to an embodiment of the present invention. FIG. 10 shows only a scenario where all routers in a BIER domain support the BIER technology. In FIG. 10, depending on actual deployment, each of the routers supporting the BIER technology in the BIER domain interacts with a controller, or only bit-forwarding ingress routers (BFIRs) in the BIER domain interact with the controller, or a specific BIER router in the BIER domain interacts with the controller. The controller needs to collect BIER information. In one or more exemplary embodiments, a BGP module in a router may collect the BIER information for calculation of a BIER path. In one or more exemplary embodiments, a Path Control Element (PCE) in the router may calculate the BIER path. FIG. 11 is a flow chart of a path calculation according to the embodiment one of the present invention. As shown in FIG. 11, the embodiment one of the present invention includes the steps described below.

In step S1102, related BIER routers in the BIER domain notify BIER-related information (corresponding to the BIER information described above) to the controller by the BGP-LS protocol.

Here the BIER-related information includes, but is not limited to: basic BIER information, such as at least one of BFR-id, Sub-domain, Bitstring Length (BSL), one or more related labels and BIER prefix, and so on. The BIER-related information may further include BIER-TE-related information. The BIER-TE-related information corresponds to the BIER-TE information described above and includes at least one of the followings: link bandwidth information, reserved bandwidth information, link coloring information, and metric information.

Here, depending on deployment, among the related BIER routers in the BIER domain, all the BIER routers may be connected to the controller, or specific BIER routers may be connected to the controller, or only the ingress nodes of BIER may be connected to the controller.

If only the ingress nodes of BIER are connected to the controller, the ingress nodes of BIER may collect BIER information of related nodes in the BIER domain by IGP/BGP-LS and then report the collected BIER information to the controller.

In step S1104, after receiving the BIER-related information, the controller calculates the BIER path according to the related information.

In step S1106, the controller delivers a set that identifies nodes through which the path passes.

In the step S1106, the set may be a set of BFR-IDs or may be a set of Bitstrings.

The controller may deliver the set to only a head node or deliver the set to both the head node and an intermediate node.

### Example two:

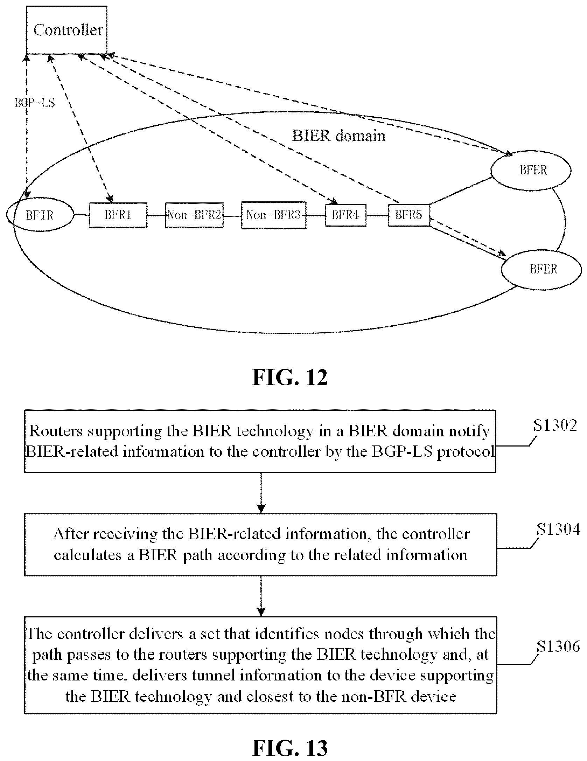

FIG. 12 is a networking diagram of a hybrid scenario in a centralized control scenario according to an embodiment of the present invention. In the embodiment, it is assumed that a device supporting the BIER technology and closest to a non-BFR device interacts with the controller. FIG. 13 is a flow chart of a path calculation according to the embodiment two of the present invention. As shown in FIG. 13, the embodiment two of the present invention includes the steps described below.

In step S1302, routers supporting the BIER technology in a BIER domain notify BIER-related information (corresponding to the BIER information described above) to the controller by the BGP-LS protocol.

Here the BIER-related information includes, but is not limited to: information about BFR-id, sub-domain, BSL, one or more related labels and/or BIER prefix, and so on. The BIER-related information may further include BIER-TE-related information. The BIER-TE-related information corresponds to the BIER-TE information described above and includes at least one of the followings: link bandwidth information, reserved bandwidth information, link coloring information, and metric information.

Routers not supporting the BIER technology in the BIER domain, such as Non-BFR2 and Non-BFR3 in FIG. 12, do not notify BIER-related information to the controller.

In step S1304, after receiving the BIER-related information, the controller calculates a BIER path according to the related information.

In step S1306, the controller delivers a set that identifies nodes through which the path passes to the routers supporting the BIER technology and, at the same time, delivers tunnel information to the device(s) supporting the BIER technology and closest to the non-BFR device(s).

In the step, the set may be a set of BFR-IDs or a set of Bitstrings.

Here the tunnel information includes notifying a node that a tunnel needs to be established, but the tunnel is to be established by a signaling by the device supporting the BIER technology, or the controller delivers a tunnel label directly.

### Example three:

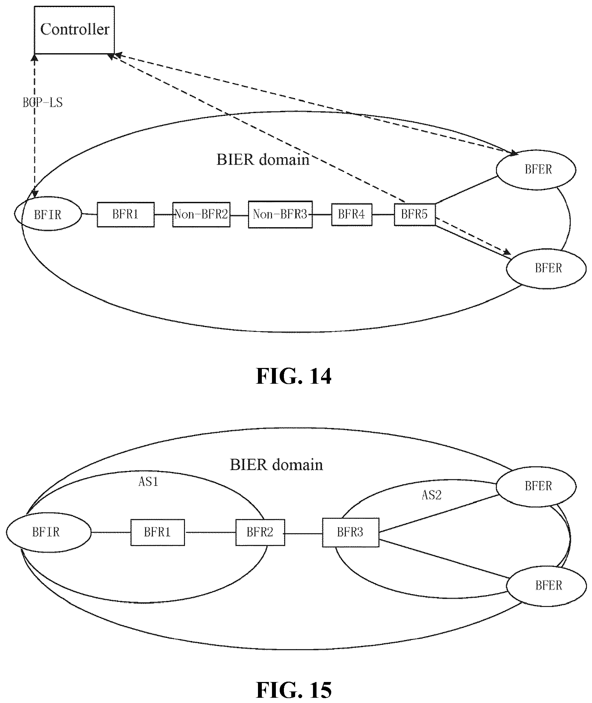

FIG. 14 is a networking diagram of another hybrid scenario in a centralized control scenario according to an embodiment of the present invention. In the embodiment, only ingress node(s) and egress node(s) in a BIER domain are connected to the controller and a device supporting the BIER technology and closest to a non-BFR device does not interact with the controller. The scenario of the embodiment is similar to the embodiment two except that the tunnel information delivered by the controller is delivered to only the ingress node(s) and the ingress node(s) notifies, by a signaling, the device supporting the BIER technology and closest to the non-BFR device to establish, by a signaling, a tunnel to pass through the non-BFR device.

### Example four:

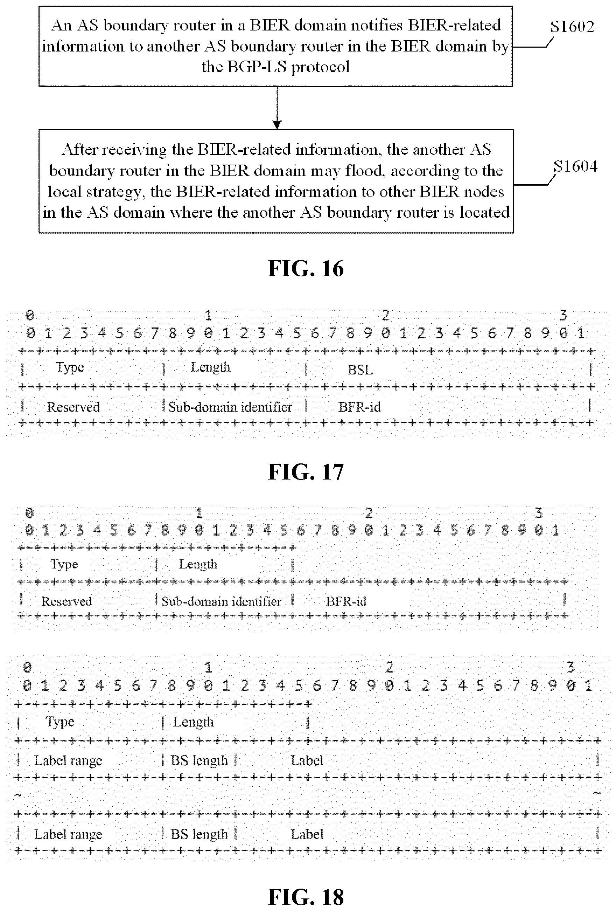

FIG. 15 is a networking diagram of a distributed BIER technology according to an embodiment of the present invention. FIG. 15 shows only a scenario where all routers in a BIER domain support the BIER technology. The embodiment is also applicable to a scenario where device(s) not supporting BIER forwarding may exist in the BIER domain. After IGP is extended against BIER, flooding is still in only an IGP domain. In this case, BIER needs to be notified by BGP-LS cross IGP domains or cross AS boundaries. As shown in FIG. 15, BIER-related information needs to be notified by BGP-LS between BFR2 and BFR3. FIG. 16 is a flow chart of a path calculation according to the embodiment four of the present invention. As shown in FIG. 16, the embodiment four includes the steps described below.

In step S1602, an AS boundary router in the BIER domain notifies BIER-related information (corresponding to the BIER information described above) to another AS boundary router in the BIER domain by the BGP-LS protocol.

As shown in FIG. 15, the AS boundary routers in the BIER domain refer to BFR2 and BFR3.

The BIER information transmitted by BFR2 to BFR3 may be BIER information of all nodes in the AS domain where BFR2 is located or BIER information of related nodes after BFR2 makes a selection by use of a local strategy. Similarly, the BIER information transmitted by BFR3 to BFR2 may be BIER information of all nodes in the AS domain where BFR3 is located or BIER information of related nodes after BFR3 makes a selection by use of a local strategy.

Here the BIER-related information includes, but is not limited to: information about BFR-id, sub-domain, BSL, one or more related labels and/or BIER prefix, and so on. The BIER-related information may further include BIER-TE-related information. The BIER-TE-related information corresponds to the BIER-TE information described above and includes at least one of the followings: link bandwidth information, reserved bandwidth information, link coloring information, and metric information.

In step S1604, after receiving the BIER-related information, the another AS boundary router in the BIER domain may flood, according to the local strategy, the BIER-related information to other BIER nodes in the AS domain where the another AS boundary router is located.

As shown in FIG. 15, after receiving the BIER information transmitted by BFR2, BFR3 may flood, according to the local strategy, the received BIER-related information to all or specific BIER nodes in the AS2 domain. Similarly, after receiving the BIER information transmitted by BFR3, BFR2 may flood, according to the local strategy, the received BIER-related information to all or specific BIER nodes in the AS 1 domain.

### Example five:

It can be seen from the above embodiments that the BIER-related information may be carried in the extended BGP-LS so as to be transmitted, and the BIER-related information may be at various positions in the extended BGP-LS. Positions of the BIER-related information in the extended BGP-LS are described by way of examples in the embodiment described below.

FIG. 17 is a schematic diagram one of carrying BIER-related information according to an embodiment of the present invention. FIG. 17 is a schematic diagram of positions of identifier information, sub-domain information, Bitstring length information, etc., of a BFR node among all BIER nodes included in the BIER-related information in a newly-added node attribute. The above information may be in BIER info TLV in the node attribute.

FIG. 18 is a schematic diagram two of carrying BIER-related information according to an embodiment of the present invention. FIG. 18 is a schematic diagram of positions of identifier information, sub-domain information, Bitstring length information, information about one or more BIER MPLS labels, etc., of a BFR node among all BIER nodes included in the BIER-related information in the newly-added node attribute. As shown in the upper diagram in FIG. 18, the identifier information and the sub-domain information of the BFR node among all the BIER nodes may be in BIER info TLV in the node attribute. As shown in the lower diagram in FIG. 18, the information about one or more BIER MPLS labels and the Bitstring length information may be in BIER MPLS Encapsulation sub-TLV in the node attribute.

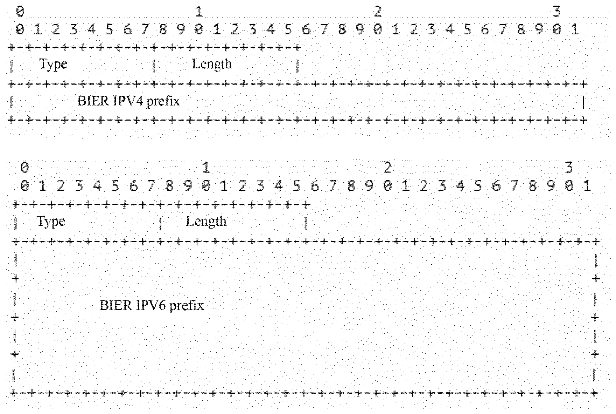

FIG. 19 is a schematic diagram three of carrying BIER-related information according to an embodiment of the present invention. FIG. 19 is a schematic diagram of positions of BIER prefix information included in the BIER-related information in a newly-added node attribute. The position of BIER IPV4 prefix information in the newly-added node attribute may be as shown in the upper diagram in FIG. 19. The position of BIER IPV6 prefix information in the newly-added node attribute may be as shown in the lower diagram in FIG. 19.

It is to be noted that the various modules described above may be implemented by software or hardware. Implementation by hardware may be, but may be not limited to, performed by the following way: the various modules described above are located in a same processor, or the various modules described above are located in their respective processors.

An embodiment of the present invention further provides a computer-readable storage medium. Alternatively, in the embodiment, the computer-readable storage medium may be configured to store program codes for executing the steps described below.

In step S11, a BIER node encapsulates BIER information by use of an extended BGP-LS.

In step S12, the BIER node notifies the BIER information to a predetermined node according to the extended BGP-LS.

In one or more exemplary embodiments, the computer-readable storage medium is further configured to store program codes for executing the steps described below.

In step S21, the predetermined node receives the BIER information transmitted by the BIER node according to the extended BGP-LS, where the BIER information is BIER information encapsulated in the extended BGP-LS by the BIER node.

Alternatively, in the embodiment, the computer-readable storage medium may include, but is not limited to, various medium capable of storing program codes, such as a U disk, a read-only memory (ROM), a random access memory (RAM), a mobile hard disk, a magnetic disk, or an optical disk, etc.

Alternatively, in the embodiment, a processor executes steps S11 and S12 according to the program codes stored in the computer-readable storage medium.

Alternatively, in the embodiment, the processor executes step S21 according to the program codes stored in the computer-readable storage medium.

Alternatively, specific examples in the embodiment may refer to the examples described in the above embodiments and alternative embodiments, and the specific examples will not be repeated in this embodiment.

Those skilled in the art should know that each module or step mentioned above of the present application may be implemented by a universal computing device, they may be concentrated on a single computing device or distributed in a network formed by multiple computing devices, and alternatively, they may be implemented by program codes executable by the computing devices, so that they may be stored in a storage device for execution by the computing devices. In some circumstances, the illustrated or described steps may be executed in sequences different from those described herein, or they may be made into various integrated circuit modules separately, or multiple modules or steps therein may be made into a single integrated circuit module for implementation. Therefore, the present application is not limited to any specific combination of hardware and software.

### INDUSTRIAL APPLICABILITY

Embodiments of the present application provide methods for transmitting and receiving BIER information and apparatuses, which solve the problem in which BIER information cannot be collected in the related art, thereby achieving the effect of being capable of collecting BIER information.

## Claims

1. A method for transmitting Bit Indexed Explicit Replication, BIER, information, comprising:
encapsulating (S102), by a BIER node, BIER information by use of an extended Border Gateway Protocol-Link State, BGP-LS; and
notifying (S104), by the BIER node, the BIER information to a predetermined node according to the extended BGP-LS; wherein the predetermined node is a controller for calculating a path of a BIER-Traffic Engineering, BIER-TE, according to the BIER information, and the BIER node comprises a BIER node that is in a BIER domain, supports a BIER technology and is connected to the controller.

2. The method according to claim 1, wherein the BIER node encapsulating the BIER information by use of the extended BGP-LS comprises:
adding, by the BIER node, at least one BGP-LS attribute; and
encapsulating, by the BIER node, the BIER information by use of the at least one added BGP-LS attribute.

3. The method according to claim 2, wherein each of the at least one added BGP-LS attribute comprises at least one of the followings: at least one newly-added node attribute, and at least one newly-added link attribute, and
wherein a corresponding relation between the at least one added BGP-LS attribute and the BIER information comprises at least one of the followings:
when one of the at least one added BGP-LS attribute is the at least one newly-added node attribute, the BIER information comprises at least one of the followings: identifier information of a bit forwarding router, BFR, node in all BIER nodes, sub-domain information, Bitstring length information, information about at least one BIER Multi-Protocol Label Switching, MPLS, label, and BIER prefix information, wherein the BIER prefix information comprises at least one of Internet Protocol version 4, IPV4, BIER prefix information and IPV6 BIER prefix information; and
when one of the at least one added BGP-LS attribute is the at least one newly-added link attribute, the BIER information comprises BIER-Traffic Engineering, BIER-TE, information, wherein the BIER-TE information comprises at least one of the followings: link bandwidth information, reserved bandwidth information, link coloring information, and metric information.

4. The method according to claim 1, wherein, when the BIER node, that is in a BIER domain, supports a BIER technology and is connected to the controller, is an ingress node of the BIER, the BIER information is at least one of: BIER information which is of a predetermined BIER node in the BIER domain and is pre-collected by the ingress node of the BIER, and BIER information of the ingress node of the BIER.

5. The method according to claim 4, wherein, after the BIER node notifies the BIER information to the predetermined node according to the extended BGP-LS, the method further comprises:
receiving, by the BIER node, path information transmitted by the controller after the controller calculates the path of the BIER-TE;
wherein the path information comprises information about BIER nodes through which the path passes, and
wherein the information about the BIER nodes through which the path passes comprises: a set of identifiers of the BIER nodes through which the path passes, or a set of Bitstrings of the BIER nodes through which the path passes.

6. The method according to claim 4, wherein, after the BIER node notifies the BIER information to the predetermined node according to the extended BGP-LS, the method further comprises:
receiving, by the BIER node, tunnel information transmitted by the controller after the controller calculates a path of the BIER-TE; and
establishing, by the BIER node, a tunnel according to the tunnel information; and/or notifying, by the BIER node, the tunnel information to a BIER supporting node, which is in the BIER domain, supports the BIER technology and is closest to a node not supporting the BIER technology, to instruct the BIER supporting node to establish a tunnel according to the tunnel information;
wherein the tunnel information comprises notification information for establishing the tunnel or tunnel label information for establishing the tunnel.

7. The method according to claim 1, wherein
the BIER node is a first autonomous system, AS, boundary BIER node in a BIER domain, and the predetermined node is a second AS boundary BIER node in the BIER domain;
wherein the BIER information is BIER information of all BIER nodes in an AS domain where the first AS boundary BIER node is located, or BIER information of a part of BIER nodes in the AS domain where the first AS boundary BIER node is located; and
wherein the part of the BIER nodes are BIER nodes determined by the first AS boundary BIER node according to a predetermined strategy, and the second AS boundary BIER node, after receiving the BIER information, floods the BIER information to all or specific BIER nodes in an AS domain where the second AS boundary BIER node is located.

8. A method for receiving Bit Indexed Explicit Replication, BIER, information, comprising:
receiving (S202), by a predetermined node, BIER information transmitted by a BIER node according to an extended Border Gateway Protocol -Link State, BGP-LS, wherein the BIER information is BIER information encapsulated in the extended BGP-LS by the BIER node; wherein the predetermined node is a controller for calculating a path of a BIER-traffic engineering, BIER-TE, according to the BIER information, and the BIER node comprises a BIER node that is in a BIER domain, supports a BIER technology and is connected to the controller.

9. The method according to claim 8, wherein, when the BIER node, that is in a BIER domain, supports a BIER technology and is connected to the controller, is an ingress node of the BIER, the BIER information is at least one of: BIER information which is of a predetermined BIER node in the BIER domain and is pre-collected by the ingress node of the BIER, and BIER information of the ingress node of the BIER.

10. The method according to claim 9, wherein, after the predetermined node receives the BIER information, the method further comprises:
calculating, by the predetermined node, the path of the BIER-TE according to the BIER information; and
transmitting, by the predetermined node, path information of the path to the BIER node; or transmitting, by the predetermined node, path information of the path to the ingress node of the BIER, an intermediate node of the BIER and an egress node of the BIER in the BIER domain where the BIER node is located;
wherein the path information comprises information about BIER nodes through which the path passes, and
wherein the information about the BIER nodes through which the path passes comprises: a set of identifiers of the BIER nodes through which the path passes, or a set of Bitstrings of the BIER nodes through which the path passes.

11. The method according to claim 9, wherein, after the predetermined node receives the BIER information, the method further comprises:
the predetermined node calculating the path of the BIER-TE according to the BIER information; and
after calculating the path, the predetermined node transmitting tunnel information to the BIER node , wherein the tunnel information is used for at least one of: instructing the BIER node to establish a tunnel, and instructing the BIER node to notify the tunnel information to a BIER supporting node, which is in the BIER domain, supports the BIER technology and is closest to a node not supporting the BIER technology, to instruct the BIER supporting node to establish a tunnel according to the tunnel information, or
after calculating the path, the predetermined node transmitting tunnel information to a BIER supporting node, which is in the BIER domain where the BIER node is located, supports the BIER technology and is closest to a node not supporting the BIER technology, wherein the tunnel information is used for instructing the BIER supporting node to establish a tunnel;
wherein the tunnel information comprises notification information for establishing the tunnel or tunnel label information for establishing the tunnel.

12. The method according to claim 8, wherein
the BIER node is a first autonomous system, AS, boundary BIER node in a BIER domain, and the predetermined node is a second AS boundary BIER node in the BIER domain;
wherein the BIER information is BIER information of all BIER nodes in an AS domain where the first AS boundary BIER node is located, or BIER information of a part of BIER nodes in the AS domain where the first AS boundary BIER node is located; and
wherein the part of the BIER nodes are BIER nodes determined by the first AS boundary BIER node according to a predetermined strategy, and the second AS boundary BIER node, after receiving the BIER information, floods the BIER information to all or specific BIER nodes in an AS domain where the second AS boundary BIER node is located.

13. An apparatus for transmitting Bit Indexed Explicit Replication, BIER, information, which is applied to a BIER node and comprises:
an encapsulation module (32), configured to encapsulate the BIER information by use of an extended Border Gateway Protocol-Link State, BGP-LS; and
a notification module (34), configured to notify the BIER information to a predetermined node according to the extended BGP-LS; wherein the predetermined node is a controller for calculating a path of a BIER- traffic engineering, BIER-TE, according to the BIER information, and the BIER node comprises a BIER node that is in a BIER domain, supports a BIER technology and is connected to the controller.

14. The apparatus according to claim 13, wherein the encapsulation module comprises:
an adding unit (42), configured to add at least one BGP-LS attribute; and
an encapsulation unit (44), configured to encapsulate the BIER information by use of the at least one added BGP-LS attribute.

15. An apparatus for receiving Bit Indexed Explicit Replication, BIER, information, which is applied to a predetermined node, comprising:
a receiving module (72), configured to receive BIER information transmitted by a BIER node according to an extended Border Gateway Protocol-Link State, BGP-LS, wherein the BIER information is BIER information encapsulated in the extended BGP-LS by the BIER node;
wherein the predetermined node is a controller configured to calculate a path of a BIER-traffic engineering,
BIER-TE, according to the BIER information, and the BIER node comprises a BIER node that is in a BIER domain, supports a BIER technology and is connected to the controller.

## Patentansprüche

1. Verfahren zum Übertragen von Bit Indexed Explicit Replication, BIER, -Informationen, umfassend:
Kapseln (S102), durch einen BIER-Knoten, von BIER-Informationen durch Verwendung eines erweiterten Border Gateway Protocol-Link State, BGP-LS; und
Mitteilen (S104), durch den BIER-Knoten, der BIER-Informationen an einen vorbestimmten Knoten gemäß dem erweiterten BGP-LS; wobei der vorbestimmte Knoten eine Steuerung zum Berechnen eines Pfads eines BIER-Traffic Engineering, BIER-TE, gemäß den BIER-Informationen ist und der BIER-Knoten einen BIER-Knoten umfasst, der in einer BIER-Domain ist, eine BIER-Technologie unterstützt und mit der Steuerung verbunden ist.

2. Verfahren nach Anspruch 1, wobei das Kapseln der BIER-Informationen durch den BIER-Knoten durch Verwendung des erweiterten BGP-LS Folgendes umfasst:
Hinzufügen, durch den BIER-Knoten, mindestens eines BGP-LS-Attributs; und
Kapseln, durch den BIER-Knoten, der BIER-Informationen durch Verwendung des mindestens einen hinzugefügten BGP-LS-Attributs.

3. Verfahren nach Anspruch 2, wobei jedes des mindestens einen hinzugefügten BGP-LS-Attributs mindestens eines der Folgenden umfasst: mindestens ein neu hinzugefügtes Knotenattribut und mindestens ein neu hinzugefügtes Linkattribut, und
wobei eine entsprechende Beziehung zwischen dem mindestens einen hinzugefügten BGP-LS-Attribut und den BIER-Informationen mindestens eines der Folgenden umfasst:
wenn eines des mindestens einen hinzugefügten BGP-LS-Attributs das mindestens eine neu hinzugefügte Knotenattribut ist, umfassen die BIER-Informationen mindestens eines der Folgenden: Kennungsinformationen eines Bit Forwarding Router, BFR, -Knotens in allen BIER-Knoten, Subdomaininformationen, Bitfolgenlängeninformationen, Informationen über mindestens ein BIER Multi-Protocol Label Switching, MPLS, -Label und BIER-Präfixinformationen, wobei die BIER-Präfixinformationen mindestens eines von Internet Protocol Version 4, IPV4, -BIER-Präfixinformationen und IPV6-BIER-Präfixinformationen umfassen; und
wenn eines des mindestens einen hinzugefügten BGP-LS-Attributs das mindestens eine neu hinzugefügte Linkattribut ist, umfassen die BIER-Informationen BIER-Traffic Engineering, BIER-TE, - Informationen, wobei die BIER-TE-Informationen mindestens eines der Folgenden umfassen: Linkbandbreiteninformationen, Informationen zu reservierter Bandbreite, Linkfärbungsinformationen und Metrikinformationen.

4. Verfahren nach Anspruch 1, wobei, wenn der BIER-Knoten, der in einer BIER-Domain ist, eine BIER-Technologie unterstützt und mit der Steuerung verbunden ist, ein Eintrittsknoten der BIER ist, die BIER-Informationen mindestens eines der Folgenden sind:
BIER-Informationen, die zu einem vorbestimmten BIER-Knoten in der BIER-Domain gehören und vorab durch den Eintrittsknoten der BIER gesammelt werden, und BIER-Informationen des Eintrittsknotens der BIER.

5. Verfahren nach Anspruch 4, wobei, nachdem der BIER-Knoten die BIER-Informationen gemäß dem erweiterten BGP-LS an den vorbestimmten Knoten mitgeteilt hat, das Verfahren ferner Folgendes umfasst:
Empfangen, durch den BIER-Knoten, von Pfadinformationen, die durch die Steuerung übertragen werden, nachdem die Steuerung den Pfad des BIER-TE berechnet hat;
wobei die Pfadinformationen Informationen über BIER-Knoten umfassen, durch die der Pfad verläuft, und
wobei die Informationen über die BIER-Knoten, durch die der Pfad verläuft, Folgendes umfassen: einen Satz von Kennungen der BIER-Knoten, durch die der Pfad verläuft, oder einen Satz von Bitfolgen der BIER-Knoten, durch die der Pfad verläuft.

6. Verfahren nach Anspruch 4, wobei, nachdem der BIER-Knoten die BIER-Informationen gemäß dem erweiterten BGP-LS an den vorbestimmten Knoten mitgeteilt hat, das Verfahren ferner Folgendes umfasst:
Empfangen, durch den BIER-Knoten, von Tunnelinformationen, die durch die Steuerung übertragen werden, nachdem die Steuerung einen Pfad des BIER-TE berechnet hat; und
Aufbauen, durch den BIER-Knoten, eines Tunnels gemäß den Tunnelinformationen; und/oder Mitteilen, durch den BIER-Knoten, der Tunnelinformationen an einen BIER-Unterstützungsknoten, der in der BIER-Domain ist, die BIER-Technologie unterstützt und einem Knoten, der die BIER-Technologie nicht unterstützt, am nächsten ist, um den BIER-Unterstützungsknoten anzuweisen, einen Tunnel gemäß den Tunnelinformationen aufzubauen;
wobei die Tunnelinformationen Mitteilungsinformationen zum Aufbauen des Tunnels oder Tunnellabelinformationen zum Aufbauen des Tunnels umfassen.

7. Verfahren nach Anspruch 1, wobei
der BIER-Knoten ein erster Autonomes System, AS, -Rand-BIER-Knoten in einer BIER-Domäne ist und der vorbestimmte Knoten ein zweiter AS-Rand-BIER-Knoten in der BIER-Domain ist;
wobei es sich bei den BIER-Informationen um BIER-Informationen von allen BIER-Knoten in einer AS-Domain, in der sich der erste AS-Rand-BIER-Knoten befindet, oder um BIER-Informationen von einem Teil von BIER-Knoten in der AS-Domain, in der sich der erste AS-Rand-BIER-Knoten befindet, handelt; und
wobei es sich bei dem Teil der BIER-Knoten um BIER-Knoten handelt, die durch den ersten AS-Rand-BIER-Knoten gemäß einer vorbestimmten Strategie bestimmt werden, und der zweite AS-Rand-BIER-Knoten, nachdem er die BIER-Informationen empfangen hat, die BIER-Informationen zu allen oder spezifischen BIER-Knoten in einer AS-Domain flutet, in der sich der zweite AS-Rand-BIER-Knoten befindet.

8. Verfahren zum Empfangen von Bit Indexed Explicit Replication, BIER, -Informationen, umfassend:
Empfangen (S202), durch einen vorbestimmten Knoten, von BIER-Informationen, die durch einen BIER-Knoten gemäß einem erweiterten Border Gateway Protocol-Link State, BGP-LS,
übertragen werden, wobei es sich bei den BIER-Informationen um BIER-Informationen handelt, die in dem erweiterten BGP-LS durch den BIER-Knoten gekapselt sind; wobei der vorbestimmte Knoten eine Steuerung zum Berechnen eines Pfads eines BIER-Traffic Engineering, BIER-TE, gemäß den BIER-Informationen ist und der BIER-Knoten einen BIER-Knoten umfasst, der in einer BIER-Domain ist, eine BIER-Technologie unterstützt und mit der Steuerung verbunden ist.

9. Verfahren nach Anspruch 8, wobei, wenn der BIER-Knoten, der in einer BIER-Domain ist, eine BIER-Technologie unterstützt und mit der Steuerung verbunden ist, ein Eintrittsknoten der BIER ist, die BIER-Informationen mindestens eines der Folgenden sind: BIER-Informationen, die zu einem vorbestimmten BIER-Knoten in der BIER-Domain gehören und vorab durch den Eintrittsknoten der BIER gesammelt werden, und BIER-Informationen des Eintrittsknotens der BIER.

10. Verfahren nach Anspruch 9, wobei, nachdem der vorbestimmte Knoten die BIER-Informationen empfangen hat, das Verfahren ferner Folgendes umfasst:
Berechnen, durch den vorbestimmten Knoten, des Pfads des BIER-TE gemäß den BIER-Informationen; und
Übertragen, durch den vorbestimmten Knoten, von Pfadinformationen des Pfads an den BIER-Knoten; oder Übertragen, durch den vorbestimmten Knoten, von Pfadinformationen des Pfads an den Eintrittsknoten der BIER, einen Zwischenknoten der BIER und einen Eintrittsknoten der BIER in der BIER-Domain, in der sich der BIER-Knoten befindet;
wobei die Pfadinformationen Informationen über BIER-Knoten umfassen, durch die der Pfad verläuft, und
wobei die Informationen über die BIER-Knoten, durch die der Pfad verläuft, Folgendes umfassen: einen Satz von Kennungen der BIER-Knoten, durch die der Pfad verläuft, oder einen Satz von Bitfolgen der BIER-Knoten, durch die der Pfad verläuft.

11. Verfahren nach Anspruch 9, wobei, nachdem der vorbestimmte Knoten die BIER-Informationen empfangen hat, das Verfahren ferner Folgendes umfasst:
Berechnen des Pfads des BIER-TE durch den vorbestimmten Knoten gemäß den BIER-Informationen; und
nach dem Berechnen des Pfads Übertragen von Tunnelinformationen durch den vorbestimmten Knoten an den BIER-Knoten, wobei die Tunnelinformationen für mindestens eines der Folgenden verwendet werden: Anweisen, dass der BIER-Knoten einen Tunnel aufbaut, und Anweisen, dass der BIER-Knoten die Tunnelinformationen an einen BIER-Unterstützungsknoten mitteilt, der in der BIER-Domain ist, die BIER-Technologie unterstützt und einem Knoten, der die BIER-Technologie nicht unterstützt, am nächsten ist, um den BIER-Unterstützungsknoten anzuweisen, einen Tunnel gemäß den Tunnelinformationen aufzubauen, oder
nach dem Berechnen des Pfads Übertragen von Tunnelinformationen durch den vorbestimmten Knoten an einen BIER-Unterstützungsknoten, der in der BIER-Domain ist, in der sich der BIER-Knoten befindet, die BIER-Technologie unterstützt und einem Knoten, der die BIER-Technologie nicht unterstützt, am nächsten ist, wobei die Tunnelinformationen dazu verwendet werden, den BIER-Unterstützungsknoten anzuweisen, einen Tunnel aufzubauen;
wobei die Tunnelinformationen Mitteilungsinformationen zum Aufbauen des Tunnels oder Tunnellabelinformationen zum Aufbauen des Tunnels umfassen.

12. Verfahren nach Anspruch 8, wobei
der BIER-Knoten ein erster Autonomes System, AS, -Rand-BIER-Knoten in einer BIER-Domäne ist und der vorbestimmte Knoten ein zweiter AS-Rand-BIER-Knoten in der BIER-Domain ist;
wobei es sich bei den BIER-Informationen um BIER-Informationen von allen BIER-Knoten in einer AS-Domain, in der sich der erste AS-Rand-BIER-Knoten befindet, oder um BIER-Informationen von einem Teil von BIER-Knoten in der AS-Domain, in der sich der erste AS-Rand-BIER-Knoten befindet, handelt; und
wobei es sich bei dem Teil der BIER-Knoten um BIER-Knoten handelt, die durch den ersten AS-Rand-BIER-Knoten gemäß einer vorbestimmten Strategie bestimmt werden, und der zweite AS-Rand-BIER-Knoten, nachdem er die BIER-Informationen empfangen hat, die BIER-Informationen zu allen oder spezifischen BIER-Knoten in einer AS-Domain flutet, in der sich der zweite AS-Rand-BIER-Knoten befindet.

13. Einrichtung zum Übertragen von Bit Indexed Explicit Replication, BIER, -Informationen, die auf einen BIER-Knoten angewendet ist und Folgendes umfasst:
ein Kapselungsmodul (32), das dazu konfiguriert ist, die BIER-Informationen durch Verwendung eines erweiterten Border Gateway Protocol-Link State, BGP-LS, zu kapseln; und
ein Mitteilungsmodul (34), das dazu konfiguriert ist, die BIER-Informationen gemäß dem erweiterten BGP-LS an einen vorbestimmten Knoten mitzuteilen; wobei der vorbestimmte Knoten eine Steuerung zum Berechnen eines Pfads eines BIER-Traffic Engineering, BIER-TE, gemäß den BIER-Informationen ist und der BIER-Knoten einen BIER-Knoten umfasst, der in einer BIER-Domain ist, eine BIER-Technologie unterstützt und mit der Steuerung verbunden ist.

14. Einrichtung nach Anspruch 13, wobei das Kapselungsmodul Folgendes umfasst:
eine Hinzufügeeinheit (42), die dazu konfiguriert ist, mindestens ein BGP-LS-Attribut hinzuzufügen; und
eine Kapselungseinheit (44), die dazu konfiguriert ist, die BIER-Informationen durch Verwendung des mindestens einen hinzugefügten BGP-LS-Attributs zu kapseln.

15. Einrichtung zum Empfangen von Bit Indexed Explicit Replication, BIER, -Informationen, die auf einen vorbestimmten Knoten angewendet ist, umfassend:
ein Empfangsmodul (72), das dazu konfiguriert ist, BIER-Informationen zu empfangen, die durch einen BIER-Knoten gemäß einem erweiterten Border Gateway Protocol-Link State, BGP-LS, übertragen werden, wobei es sich bei den BIER-Informationen um BIER-Informationen handelt, die in dem erweiterten BGP-LS durch den BIER-Knoten gekapselt sind; wobei der vorbestimmte Knoten eine Steuerung ist, die dazu konfiguriert ist, einen Pfad eines BIER-Traffic Engineering, BIER-TE, gemäß den BIER-Informationen zu berechnen, und der BIER-Knoten einen BIER-Knoten umfasst, der in einer BIER-Domain ist, eine BIER-Technologie unterstützt und mit der Steuerung verbunden ist.

## Revendications

1. Procédé d'émission d'informations de réplication explicite indexée par bit, BIER, comprenant :
l'encapsulation (S102), par un nœud BIER, d'informations BIER en utilisant un état de liaison de protocole de passerelle frontière, BGP-LS, étendu ; et
la notification (S104), par le nœud BIER, des informations BIER à un nœud prédéterminé en fonction du BGP-LS étendu ; dans lequel le nœud prédéterminé est un contrôleur pour calculer un chemin d'une ingénierie de trafic BIER, BIER-TE, en fonction des informations BIER, et le nœud BIER comprend un nœud BIER qui est dans un domaine BIER, prend en charge une technologie BIER et est connecté au contrôleur.

2. Procédé selon la revendication 1, dans lequel l'encapsulation des informations BIER par le nœud BIER en utilisant le BGP-LS étendu comprend :
l'ajout, par le nœud BIER, d'au moins un attribut BGP-LS ; et l'encapsulation, par le nœud BIER, des informations BIER en utilisant l'au moins un attribut BGP-LS ajouté.

3. Procédé selon la revendication 2, dans lequel chacun de l'au moins un attribut BGP-LS ajouté comprend au moins un des suivants : au moins un attribut de nœud nouvellement ajouté et au moins un attribut de liaison nouvellement ajouté, et
dans lequel une relation correspondante entre l'au moins un attribut BGP-LS ajouté et les informations BIER comprend au moins un parmi ce qui suit :
quand un de l'au moins un attribut BGP-LS ajouté est l'au moins un attribut de nœud nouvellement ajouté, les informations BIER comprennent au moins une des suivantes : des informations d'identificateur d'un nœud de routeur de transfert de bits, BFR, dans tous les nœuds BIER, des informations de sous-domaine, des informations de longueur de chaîne de bits, des informations concernant au moins une étiquette de commutation par étiquettes multi-protocole, MPLS, BIER, et des informations de préfixe BIER, dans lequel les informations de préfixe BIER comprennent au moins une parmi des informations de préfixe BIER de protocole Internet version 4, IPV4, et des informations de préfixe BIER IPV6 ; et
quand un de l'au moins un attribut BGP-LS ajouté est l'au moins un attribut de liaison nouvellement ajouté, les informations BIER comprennent des informations d'ingénierie de trafic BIER, BIER-TE, dans lequel les informations BIER-TE comprennent au moins une des suivantes : des informations de largeur de bande de liaison, des informations de largeur de bande réservée, des informations de coloration de liaison et des informations de métrique.

4. Procédé selon la revendication 1, dans lequel, quand le nœud BIER, qui est dans un domaine BIER, prend en charge une technologie BIER et est connecté au contrôleur, est un nœud d'entrée de la BIER, les informations BIER sont au moins une parmi : des informations BIER qui sont d'un nœud BIER prédéterminé dans le domaine BIER et sont pré-collectées par le nœud d'entrée de la BIER, et des informations BIER du nœud d'entrée de la BIER.

5. Procédé selon la revendication 4, dans lequel, après que le nœud BIER notifie les informations BIER au nœud prédéterminé en fonction du BGP-LS étendu, le procédé comprend en outre :
la réception, par le nœud BIER, d'informations de chemin transmises par le contrôleur après que le contrôleur calcul le chemin de la BIER-TE ;
dans lequel les informations de chemin comprennent des informations concernant des nœuds BIER à travers lesquels passe le chemin, et
dans lequel les informations concernant les nœuds BIER à travers lesquels passe le chemin comprennent : un ensemble d'identificateurs des nœuds BIER à travers lesquels passe le chemin ou un ensemble de chaînes de bits des nœuds BIER à travers lesquels passe le chemin.

6. Procédé selon la revendication 4, dans lequel, après que le nœud BIER notifie les informations BIER au nœud prédéterminé en fonction du BGP-LS étendu, le procédé comprend en outre :
la réception, par le nœud BIER, d'informations de tunnel transmises par le contrôleur après que le contrôleur calcule un chemin de la BIER-TE ; et
l'établissement, par le nœud BIER, d'un tunnel en fonction des informations de tunnel ; et/ou la notification, par le nœud BIER, des informations de tunnel à un nœud prenant en charge BIER, qui est dans le domaine BIER, prend en charge la technologie BIER et est le plus proche d'un nœud ne prenant pas en charge la technologie BIER, pour donner instruction au nœud prenant en charge BIER d'établir un tunnel en fonction des informations de tunnel ;
dans lequel les informations de tunnel comprennent des informations de notification pour établir le tunnel ou des informations d'étiquette de tunnel pour établir le tunnel.

7. Procédé selon la revendication 1, dans lequel le nœud BIER est un premier nœud BIER de limite de système autonome, AS, dans un domaine BIER, et le nœud prédéterminé est un second nœud BIER de limite AS dans le domaine BIER ;
dans lequel les informations BIER sont des informations BIER de tous les nœuds BIER dans un domaine AS où le premier nœud BIER de limite AS est situé, ou des informations BIER d'une partie de nœuds BIER dans le domaine AS où le premier nœud BIER de limite AS est situé ; et
dans lequel la partie des nœuds BIER est des nœuds BIER déterminés par le premier nœud BIER de limite AS en fonction d'une stratégie prédéterminée, et le second nœud BIER de limite AS, après la réception des informations BIER, diffuse les informations BIER vers tous ou des nœuds BIER spécifiques dans un domaine AS où le second nœud BIER de limite AS est situé.

8. Procédé de réception d'informations de réplication explicite indexée par bit, BIER, comprenant :
la réception (S202), par un nœud prédéterminé, d'informations BIER transmises par un nœud BIER en fonction d'un état de liaison de protocole de passerelle frontière, BGP-LS, étendu, dans lequel les informations BIER sont des informations BIER encapsulées dans le BGP-LS étendu par le nœud BIER ; dans lequel le nœud prédéterminé est un contrôleur pour calculer un chemin d'une ingénierie de trafic BIER, BIER-TE, en fonction des informations BIER, et le nœud BIER comprend un nœud BIER qui est dans un domaine BIER, prend en charge une technologie BIER et est connecté au contrôleur.

9. Procédé selon la revendication 8, dans lequel, quand le nœud BIER, qui est dans un domaine BIER, prend en charge une technologie BIER et est connecté au contrôleur, est un nœud d'entrée de la BIER, les informations BIER sont au moins une parmi : des informations BIER qui sont d'un nœud BIER prédéterminé dans le domaine BIER et sont pré-collectées par le nœud d'entrée de la BIER, et des informations BIER du nœud d'entrée de la BIER.

10. Procédé selon la revendication 9, dans lequel, après que le nœud prédéterminé reçoit les informations BIER, le procédé comprend en outre :
le calcul, par le nœud prédéterminé, du chemin de la BIER-TE en fonction des informations BIER ; et
la transmission, par le nœud prédéterminé, d'informations de chemin du chemin au nœud BIER ; ou la transmission, par le nœud prédéterminé, d'informations de chemin du chemin au nœud d'entrée de la BIER, un nœud intermédiaire de la BIER et un nœud de sortie de la BIER dans le domaine BIER où le nœud BIER est situé ;
dans lequel les informations de chemin comprennent des informations concernant des nœuds BIER à travers lesquels passe le chemin, et
dans lequel les informations concernant les nœuds BIER à travers lesquels passe le chemin comprennent : un ensemble d'identificateurs des nœuds BIER à travers lesquels passe le chemin ou un ensemble de chaînes de bits des nœuds BIER à travers lesquels passe le chemin.

11. Procédé selon la revendication 9, dans lequel, après que le nœud prédéterminé reçoit les informations BIER, le procédé comprend en outre :
le calcul par le nœud prédéterminé du chemin de la BIER-TE en fonction des informations BIER ; et
après le calcul du chemin, la transmission par le nœud prédéterminé d'informations de tunnel au nœud BIER, dans lequel les informations de tunnel sont utilisées pour au moins un parmi : le fait de donner instruction au nœud BIER d'établir un tunnel, et le fait de donner instruction au nœud BIER de notifier les informations de tunnel à un nœud prenant en charge BIER, qui est dans le domaine BIER, prend en charge la technologie BIER et est le plus proche d'un nœud ne prenant pas en charge la technologie BIER, pour donner instruction au nœud prenant en charge BIER d'établir un tunnel en fonction des informations de tunnel, ou après le calcul du chemin, la transmission par le nœud prédéterminé d'informations de tunnel à un nœud prenant en charge BIER, qui est dans le domaine BIER où le nœud BIER est situé, prend en charge la technologie BIER et est le plus proche d'un nœud ne prenant pas en charge la technologie BIER, dans lequel les informations de tunnel sont utilisées pour donner instruction au nœud prenant en charge BIER d'établir un tunnel ; dans lequel les informations de tunnel comprennent des informations de notification pour établir le tunnel ou des informations d'étiquette de tunnel pour établir le tunnel.

12. Procédé selon la revendication 8, dans lequel le nœud BIER est un premier nœud BIER de limite de système autonome, AS, dans un domaine BIER, et le nœud prédéterminé est un second nœud BIER de limite AS dans le domaine BIER ;
dans lequel les informations BIER sont des informations BIER de tous les nœuds BIER dans un domaine AS où le premier nœud BIER de limite AS est situé, ou des informations BIER d'une partie de nœuds BIER dans le domaine AS où le premier nœud BIER de limite AS est situé ; et
dans lequel la partie des nœuds BIER est des nœuds BIER déterminés par le premier nœud BIER de limite AS en fonction d'une stratégie prédéterminée, et le second nœud BIER de limite AS, après la réception des informations BIER, diffuse les informations BIER vers tous ou des nœuds BIER spécifiques dans un domaine AS où le second nœud BIER de limite AS est situé.

13. Appareil d'émission d'informations de réplication explicite indexée par bit, BIER, qui est appliqué à un nœud BIER et comprend :
un module d'encapsulation (32) configuré pour encapsuler les informations BIER en utilisant un état de liaison de protocole de passerelle frontière, BGP-LS, étendu ; et
un module de notification (34) configuré pour notifier les informations BIER à un nœud prédéterminé en fonction du BGP-LS étendu ; dans lequel le nœud prédéterminé est un contrôleur pour calculer un chemin d'une ingénierie de trafic BIER, BIER-TE, en fonction des informations BIER, et le nœud BIER comprend un nœud BIER qui est dans un domaine BIER, prend en charge une technologie BIER et est connecté au contrôleur.

14. Appareil selon la revendication 13, dans lequel le module d'encapsulation comprend :
une unité d'ajout (42) configurée pour ajouter au moins un attribut BGP-LS ; et
une unité d'encapsulation (44) configurée pour encapsuler les informations BIER en utilisant l'au moins un attribut BGP-LS ajouté.

15. Appareil de réception d'informations de réplication explicite indexée par bit, BIER, qui est appliqué à un nœud prédéterminé, comprenant :
un module de réception (72) configuré pour recevoir des informations BIER transmises par un nœud BIER en fonction d'un état de liaison de protocole de passerelle frontière, BGP-LS, étendu, dans lequel les informations BIER sont des informations BIER encapsulées dans le BGP-LS étendu par le nœud BIER ;
dans lequel le nœud prédéterminé est un contrôleur configuré pour calculer un chemin d'une ingénierie de trafic BIER, BIER-TE, en fonction des informations BIER, et le nœud BIER comprend un nœud BIER qui est dans un domaine BIER, prend en charge une technologie BIER et est connecté au contrôleur.
